# EUROPEAN PATENT APPLICATION

(11) **EP 3 355 174 A1**
(43) Date of publication of application: **01.08.2018**
(21) Application number: 16848084.6
(22) Date of filing: 19.09.2016
(51) Int. Cl.: G06F 3/0481, G06F 17/30

(54) **MULTIMEDIA TERMINAL USED FOR AIRPORT SERVICE, AND DISPLAY METHOD FOR MULTIMEDIA TERMINAL**

(30) Priority: 21.09.2015 CN 201510605025
(71) Applicant: Chigoo Interactive Technology Co., Ltd., Xinwu District Wuxi Jiangsu 214028 (CN)
(72) Inventor: CHEN, Tao, Wuxi Jiangsu 214028 (CN); WANG, Xinheng, Wuxi Jiangsu 214028 (CN); LEI, Ming, Wuxi Jiangsu 214028 (CN); ZHENG, Chengming, Wuxi Jiangsu 214028 (CN)
(74) Representative: Savini, Stefania
(86) International application number: PCT/CN2016/099388
(87) International publication number: WO 2017/050203

(57) **Abstract**

A display method for a multimedia terminal used for an airport service, and a multimedia terminal. The method comprises: collecting user information; on the basis of user feature attributes within the user information, classifying the user information in different target user groups; calling a skin interface matching a target user group corresponding to a user, and loading the skin interface onto a terminal display page of the user. The method displays a matching skin for the identity of a user, reloads a matching skin following a change in the identity of the user, and satisfies different target population requirements, thereby improving the user experience. The skin interface is very friendly, thereby increasing user satisfaction.

## Description

### FIELD OF THE INVENTION

The present invention relates to the field of data processing, and in particular, to a multimedia terminal for an airport service and a display method for the multimedia terminal.

### BACKGROUND OF THE INVENTION

With the rapid development of the air transport industry and the improvement of social and economic conditions, the content of aviation services is increasingly diversified. Personalized aviation services will give people better travel experience and thus increase the competitiveness of airports.

The applicant has been conducting in-depth and extensive research and development work in the field of aviation services and applied for a number of patents, for instance, Chinese Patent Application No. 201410653839.5, titled "Method and System for Providing Mobile Self-service in Airport"; Chinese design patent No. 201430296729.9, titled "Multimedia Handcart"; and Chinese utility model patent No. 201320012580.7, titled "Handcart with Electronic Device, and Charging Device". A self-service product in an airport terminal, which is installed on the handcart, may present personal flight information to a passenger and provide an airport information service for the passenger.

In order to give passengers better usage experience, more and more manufacturers have added a skin or theme function to their own software respectively. Software skin refers to a software interface, i.e., a visual appearance of the software. In the prior art, the skin interface is generally stored directly in a software package. Only a default skin (for example, the skin configured with a blue background, a medium button font, and no operation prompts) can be seen by a user using a terminal, thereby bringing inconvenience and dull application experience to some target passenger groups. For example, for old passengers, they need a bigger font if they feel that the medium font is still small, and also they hope for mature and solemn colors if they feel that the background color is too lively. Moreover, it is very inconvenient for passengers who have not used the terminal before in the absence of operation prompts.

### SUMMARY OF THE INVENTION

In order to at least partially solve the above-mentioned problems, the present invention provides a multimedia terminal for an airport service, and a display method for the multimedia terminal.

According to one aspect of the present invention, there is provided a display method for a multimedia terminal for an airport service, comprising the following steps:
collecting user information;
classifying the user information into different target user groups on the basis of characteristic attributes of users in the user information; and
calling a skin interface that matches with the target user group corresponding to the user, and loading the skin interface to a terminal display page of the user.

According to another aspect of the present invention, the present invention provides a multimedia terminal for an airport service, comprising a collection module, an interface module and a skin application module, wherein,
the collection module is configured to collect user information;
the interface module is configured to transmit the user information collected by the collection module to an external device, and transmit a skin interface from the external device to the skin application module;
the skin application module is configured to classify the user information into different target user groups in the external device on the basis of characteristic attributes of users in the user information collected by the collection module, call a skin interface that matches with the target user group corresponding to the user from the external device via the interface module, and load the skin interface to a terminal display page of the user.

In the present embodiment, by collecting personal information of users (for example, passengers), a large database is constructed by a large amount of personal information. According to the classification of characteristic attributes in the database, different target user groups can be obtained. The skin interface that matches with the target user group corresponding to the user may be loaded to indirectly obtain the skin interface that matches the user. Preferably, in the present embodiment, real-time characteristic information of the user may be acquired once every a predetermined period, and the skin interface that accurately matches with the user may be loaded according to the acquired real-time characteristic information of the user.

According to the present invention, the skin that matches with the user can be displayed based on the identity of the user, and another skin that matches with another user may be re-loaded along with the identity change of the user so as to meet the needs of different target groups and enhance the experience of the users. The skin interfaces are quite user-friendly, so that the satisfaction degree of users is improved. In addition, the present embodiment may also provide guidance prompts so that the operation is more convenient and simpler.

### BRIEF DESCRIPTION OF THE DRAWINGS

Fig. 1 is a schematic diagram of a main process of a skin display method for an airport service according to an embodiment of the present invention;
Fig. 2 is a schematic diagram of a sub-process in Fig. 1;
Fig. 3(a) is a schematic diagram of a multimedia terminal for an airport service according to an embodiment of the present invention;
Fig. 3(b) is a schematic diagram of a multimedia terminal for an airport service according to another embodiment of the present invention;
Fig. 4 is a schematic diagram of a skin application module in Fig. 3;
Fig. 5 is a schematic diagram of a skin interface for a high-end business group according to an embodiment of the present invention;
Fig. 6 is a schematic diagram of a skin interface for a young lady group according to an embodiment of the present invention;
Fig. 7 is a schematic diagram of a skin interface for an elderly person group according to an embodiment of the present invention;
Fig. 8 is a schematic diagram of a skin interface for a novice group according to an embodiment of the present invention; and
Fig. 9 is a schematic diagram of a default skin interface for a common person group according to an embodiment of the present invention.

### DETAILED DESCRIPTION OF THE EMBODIMENTS

To make the objects, technical solutions and advantages of the present invention clearer, the present invention will be described in detail with reference to the accompanying drawings and specific embodiments.

The embodiments of the present invention may be applied to a personal computer system, a server, a microprocessor-based system, a set-top box, a programmable electronic product, etc., and a distributed cloud computing technology environment including the above devices.

In the embodiments of the present invention, various functions of related functional modules may be implemented by a hardware processor and various accessories thereof.

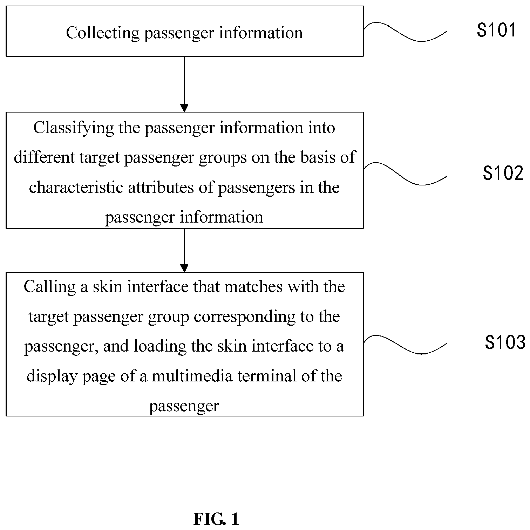

Fig. 1 is a schematic diagram of a main process of a skin display method for an airport service according to an embodiment of the present invention. This method is described by taking passengers in an airport as an example. However, those skilled in the art may understand that the applicable object may not be limited to passengers. As shown in Fig.1, the method comprises the following steps S101-S103.

In step S101, passenger information is collected.

In the present embodiment, the passenger information may include: passenger's identity information (for example, passenger's ID, flight number, gender, age, etc.), characteristic information (for example, passenger's gender, age, number, expression, etc.), historical behavior information (for example, records of the passenger who travels by plane, browsing records of the passenger, etc.), and operation information (for example, characters, digits (for example, passenger's ID number, mobile number, etc.), commands, selections, clicks, slides, etc.) input on a passenger interface.

In step S102, the passenger information is classified into different target passenger groups on the basis of characteristic attributes of passengers in the passenger information.

In the present embodiment, the information of the target passenger groups may be stored in respective data packages. A large amount of passenger information is stored in the data packages for different target passenger groups and increases continuously with the increase of the collected passenger information.

In the present embodiment, these passenger information may be analyzed and collated according to identity information and historical behavior information of different passengers, to obtain target passenger group data packages (for example, a high-end business group data package, a young lady group data package, an elderly person group data package, etc.) which are subdivided in different dimensionalities.

In the present embodiment, the characteristic attributes of the passengers may include:
1) Age: under 60, every 10 years being an age group;
   above 60, being one age group.
2) Gender: male or female;
3) Departure place: province and city where a departure airport is located;
4) Destination: the area (for example, eight areas including north China, central China, east China, south China, northwest China, northeast China, southwest China, and Hong Kong, Macao and Taiwan), province and city where a destination airport is located;
5) Take-off period: take-off time (for example: 6: 00 AM to 12:00 AM, 12: 00
   PM to 18:00 PM, 18:00 PM to 24: 00 PM) of the flight to be taken;
6) Seat: first-class or economy class;
7) Flight frequency: the number of flights the passenger has made during the most recent year; and
8) Behavior interests: investment and wealth management, real estate and home design, tourism, IT and digital technology, automobiles, fashion, education and training, childcare, recruitment and employment, sports and fitness, music, film and television and other categories (these data may be determined from the content browsed by the passenger on this terminal).

In the present embodiment, by storing and analyzing a large amount of information data of different passengers, these information data is classified into different target passenger group data packages in a passenger database on the basis of the characteristics attributes of the passengers.

In the present embodiment, the characteristic attributes of the passenger may be analyzed by using a manual analysis method, and then the passenger information of the same attribute may be classified and collated through a configuration file.

For example, a passenger group that matches with the following group attributes is defined as a high-end business group: passengers whose annual flying frequency is more than 50 times and whose flight time mostly occurs in the daytime, most of them being in first class and focusing on high-end service products such as investment and wealth management, real estate and home design, and automobiles. The configuration file is configured in a management background as follows:
1) Group ID: User_group001;
2) Group name: high-end business passenger group;
3) Group attributes:
   Attribute 1: age (30-50);
   Attribute 2: gender (not defined);
   Attribute 3: departure place (not defined);
   Attribute 4: destination (not defined);
   Attribute 5: take-off period (the probability of the departure period between 6: 00 AM and 18: 00 PM is over 70%);
   Attribute 6: seat (the probability of first-class seats is over 70%);
   Attribute 7: flight frequency (over 50 flights per year); and
   Attribute 8: behavioral interests (investment and wealth management, real estate and home design, automobiles).

The above-mentioned passenger information is classified into different target passenger groups in an accurate matching manner. When all the attributes of a passenger conform to the attributes of a target passenger group, the passenger is classified into the target passenger group. A fuzzy matching manner may also be adopted. When some of the attributes of a passenger conform to the attributes of a target passenger group, whether the passenger is classified into the target passenger group is determined according to a preset rule. The preset rule may be that, a passenger may be classified into a target passenger group when one or more attributes of the passenger conform to the attributes of the target passenger group.

The preset rule may also be that, when a proportion of the attributes of a target passenger group is greater than a first preset value (e.g., 70%), or a weight is preset for each attribute of a passenger and the total weight value of the attributes of the target passenger group is greater than a second preset value (e.g., 60%), the passenger is classified into the target passenger group.

In the present embodiment, a typical passenger group in the passenger database may, for example, include:
1) a high-end business group: passengers whose annual flying frequency is more than 50 times and whose flight time mostly occurs in the daytime, most of them being in first class and focusing on high-end service products such as investment and wealth management, real estate and home design, and automobiles;
2) a young lady group: passengers whose annual flying frequency is less than 50 times and whose flight time mostly occurs in the daytime, most of them being in economy class and focusing on cosmetology and makeup, fashion, tourism, etc.; and
3) a common person group: passengers whose annual flying frequency is less than 50 times and whose flight time mostly occurs at night, most of them being in economy class and focusing on common person service products such as education and training, music, film and television.

The above-mentioned passenger database may be adjusted according to needs. For example, to facilitate business expansion and service requirements, the present embodiment supports customizing a new passenger group.

In step S103: the skin interface that matches with the target passenger group corresponding to the passenger is called, and the skin interface is loaded to a terminal display page of the passenger.

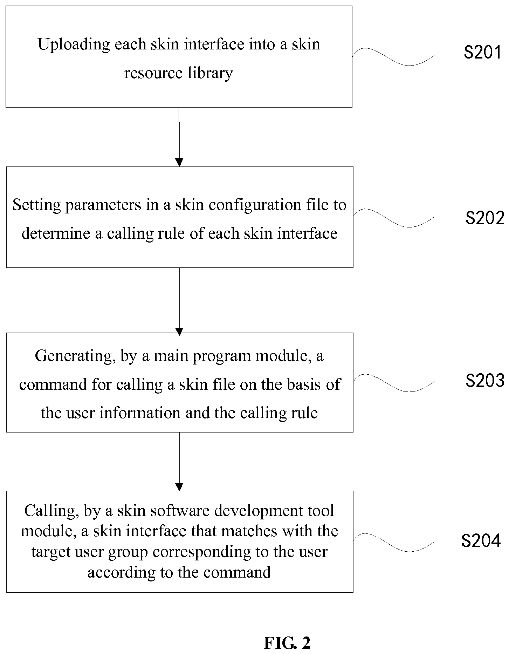

Fig. 2 is a schematic diagram of a sub-process of the step S103 in Fig. 1. As shown in Fig. 2, the step S103 comprises the following steps S201-S204.

In substep S201, each skin interface is uploaded to a skin resource library.

In the present embodiment, the skin resource library stores and manages (e.g., uploads, checks, and deletes, etc.) each skin interface.

In substep S202, parameters in a skin configuration file are set to determine a calling rule for each skin interface.

In the present embodiment, parameters may include: usage time, usage scope, storage path and name of the skin interface, and attributes of the skin interface corresponding to the target passenger group. The calling rule may include: an application scene of each skin interface and the corresponding relationship between each skin interface and the corresponding target passenger group. For example, an elderly person skin interface is called when a passenger classified into the elderly person passenger group logs in the terminal, and a high-end business skin interface is called when a passenger classified into the high-end business passenger group logs in the terminal.

In substep S203, a main program module generates a command for calling the skin interface on the basis of the passenger information and the calling rule.

In substep S204, a skin software development tool module calls the skin interface that matches with the target passenger group corresponding to the passenger according to the command.

In the present embodiment, a guidance prompt page that matches with the target passenger group corresponding to the passenger may also be loaded based on the passenger information (this part will be further described below).

In the present embodiment, the real-time characteristic information of the passenger is acquired once every a predetermined period. The passenger can be classified into a new target passenger group also based on the characteristic attributes of the passenger, and the skin interface that matches the passenger may be loaded (this part will be further described below).

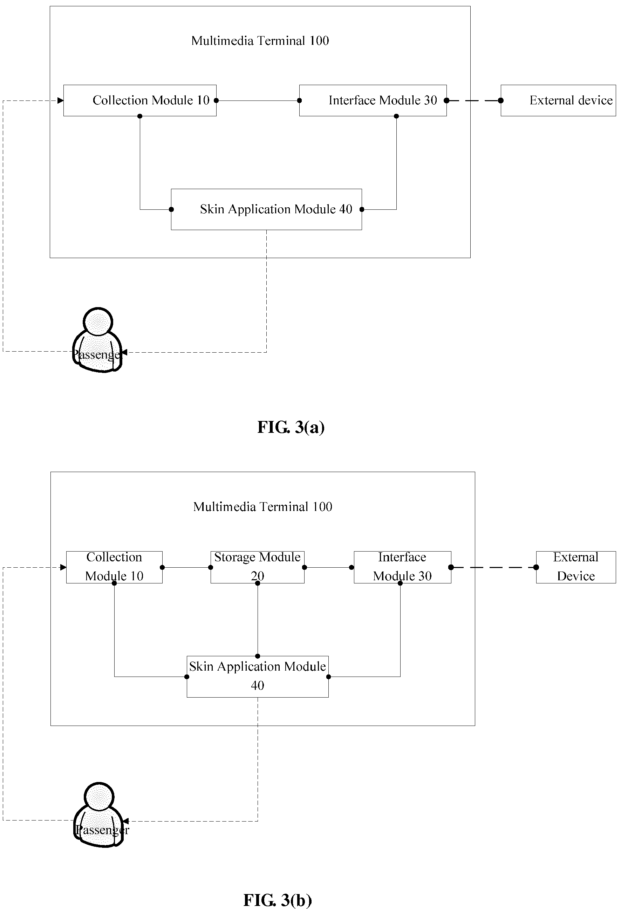

Fig. 3(a) and Fig. 3(b) are two embodiments of a multimedia terminal for an airport service according to the present invention.

As shown in Fig. 3(a), the multimedia terminal 100 may comprise a collection module 10, an interface module 30 and a skin application module 40.

In the present embodiment, an independent passenger identity number is assigned to each passenger and a registered passenger information database is established in the multimedia terminal 100. A regular passenger only needs to add his/her behavior information to the database, without repeative registering. According to identity information and historical behavior information of different passengers, these passengers' information is analyzed and collated, to obtain passenger databases which are subdivided in different dimensionalities. The specific database may refer to the database described in Fig. 1 and will not be described here.

In the present embodiment, the collection module 10 is used for collecting passenger information, and may comprise a first camera (i.e., a primary camera) for collecting the above-mentioned identity information, a second camera (i.e., a secondary camera) for collecting the above-mentioned characteristic information, and a touch screen unit for collecting operation information of a passenger on a terminal user operation interface (hereinafter referred to as a "passenger interface"). These cameras may be set in various ways according to application needs. For example, the positions of the primary camera and the secondary camera may be adjusted, the number of cameras may be increased or decreased, or other devices having imaging functions may be used instead of these cameras. In addition, the collected identity information may also be combined in different ways according to application needs, or the types and number of the collected passenger information may be increased or decreased as necessary.

In the present embodiment, the interface module 30 is configured to transmit the passenger information collected by the collection module 10 to an external device and transmit the skin interface from the external device to the skin application module 40.

In the present embodiment, the external device may be a back-end server or a third-party server that provides data support for the multimedia terminal 100. The third-party server may install a face detection and recognition system, such as Face++, and the manufacturer of the system Face++ may be, for example, Beijing Megvii Technology Limited. In addition, the third-party server may also provide, for example, an airport back-end system. The multimedia terminal 100 may acquire the following information, such as flight number, airline, departure date, departure place, destination, scheduled departure time, scheduled arrival time, flight status, boarding gate, transit place, or stopping place of a passenger's plane through the airport back-end system.

The skin application module 40 is configured to classify the passenger information into different target passenger groups in the external device on the basis of characteristic attributes of passengers in the passenger information collected by the collection module 10, call a skin interface that matches with the target passenger group corresponding to the passenger from the external device via the interface module 30, and load the skin interface to a terminal display page of the passenger.

As shown in Fig. 3(b), the multimedia terminal 100 may comprise a collection module 10, a storage module 20, an interface module 30 and a skin application module 40. In the present embodiment, the storage module 20 is additionally arranged compared with the content as shown in Fig. 3(a). The differences rather than the similarities between the two embodiments will be described here.

In the present embodiment, the storage module 20 is used for storing data packages and/or skin interfaces of different target passenger groups. The data packages and/or skin interfaces of these different target passenger groups may be pre-stored in the storage module 20, and may also be acquired from the external resource through the interface module 30.

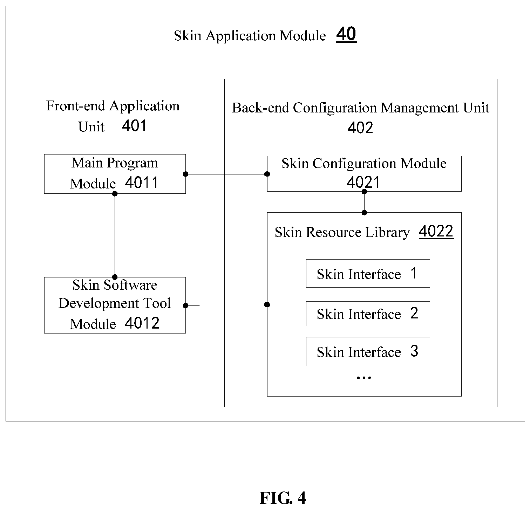

Fig. 4 is a constituent schematic diagram of the skin application module shown in Fig. 3. As shown in Fig. 4, the skin application module 40 comprises a front-end application unit 401 and a back-end configuration management unit 402.

The back-end configuration management unit 402 is used to store and manage the skin interfaces, and determine the calling rule for each skin interface according to the settings of the parameters in the skin configuration file.

The front-end application unit 401 is configured to classify the passenger information into different target passenger groups in the external device according to characteristic attributes of passengers in the passenger information collected by the collection module, call a skin interface that matches with the target passenger group corresponding to the passenger from the external device, and load the skin interface to a terminal display page of the passenger.

The front-end application unit 401 may comprise a main program module 4011 and a skin software development tool module 4012.

The back-end configuration management unit 402 may comprise a skin configuration module 4021 and a skin resource library 4022.

The skin configuration module 4021 may determine a calling rule for each skin interface according to the setting of parameters in a skin configuration file.

The parameters may include: usage time, usage scope, storage path and name of the skin interface, and attributes of the skin interface corresponding to the target passenger group.

The calling rule may include: an application scene of each skin interface and the corresponding relationship between each skin interface and the corresponding target passenger group. For example, an elderly person skin interface is called when a passenger classified into the elderly passenger group logs in the terminal. Or, a high-end business skin interface is called when a passenger classified into the high-end business passenger group logs in the terminal.

The parameters in the skin configuration file may be set as follows:
1) Skin ID: being automatically generated by the system with its value automatically increasing with the increase of the number of skins;
2) Skin name: being filled by an administrator;
3) Skin path: a path of a skin in the skin resource library, for example: skin resource library/home_skin1.apk;
4) Usage time: work day or off day (single selection or unselected by default);
5) Range of skin usage objects:
   Gender of passenger: male, female or not defined (single selection);
   Age groups of passengers: 0 to 20, 20 to 30, 30 to 40, 40 to 50, 50 to 60, above 60, or all (single selection);
   Airlines: Air China, China Southern Airlines, China Eastern Airlines, and others (single selection or unselected by default);
   Flight number: a plurality of flights for selection (multiple selection or unselected by default);
   Destination: a plurality of destinations for selection (multiple selection or unselected by default);

The skin resource library 4022 may store and manage (e.g., upload, check, delete, etc.) each skin interface.

The main program module 4011 may classify the passenger information into different target passenger groups stored in the external device on the basis of characteristic attributes of passengers in the passenger information collected by the collection module, generate a command for calling the skin interface on the basis of the passenger information and the calling rule, and transmit the command.

The skin software development tool module 4012 may call the skin interface that matches with the target passenger group corresponding to the passenger according to the command.

An implementation way of making the skin software development tool module 4012 and loading the skin interface using the same in an embodiment of the present invention will be described below.

In step 1, a skin package APK file is generated.

Developers may use an android operating system to compile programs in an eclipse integrated development environment.
Bind resources:
   @ApkResource(ResId = R.drawable.test1, Type = ResType.drawable)
View view;
Start loading resources:
   private ApkLoad apkLoad;[
   ...
   apkLoad = new ApkLoad(this);
   ...
   apkLoad.loadApkFile("/storage/sdcard1/", "Skin.sk").

When the skin interface is loaded, a ResId function uses an R calling method (an android system mechanism is adopted, and a skin interface with the same name is automatically converted into the same hexadecimal value in the android system). The main program acquires an R value of the skin interface through the skin configuration file, and acquires the skin interface corresponding to the same R value in the skin resource library through a skin package SDK (software development kit). It should be noted that the R name of the skin interface in the skin resource library of each same control needs to be the same (for example, if the skin interface in the main page home.apk is named R.drawable.bg, then in a res directory in the corresponding skin package, the skin interface must also be named R.drawable.bg). The above programs are packaged into a skin package APK file.

In Step 2, a skin package SDK (software development kit) file is generated.

Main code fragments for making the SDK are described as follows:

```
public void loadApkFile(String apkPath, String apkFileName) {
            apkInfo = new ApkInfo(apkPath, apkFileName);
            apkResources = ResManager.getResource(context, apklnfo);
            if (apkResources == null)
                return;
            if (onLoadCompleteListener != null) {
                onLoadCompleteListener.onComplete(this);
            } Field[] fields = context.getClass().getDeclaredFields();
            if (fields != null && fields.length > 0) {
                for (Field field : fields) {
                    try {
                        field.setAccessible(true);
                         Object obj = field.get(context);
                        ApkResource resource =
    field.getAnnotation(ApkResource.class);
                        if (resource != null) {
                             int resId = resource.ResId();
                             ResType type = resource.Type();
                             setValue(obj, resId, type);
                    } catch (Exception e) {
                        e.printStackTrace();
                    }
                }
            }
       }
    }
    private void setValue(Object obj, int resid, ResType type) {
            if (obj == null)
                return;
            switch (type) {
            case string:
                String str = getResources().getString(
                         getIdentifier(resid, "string"));
                if (obj instanceof TextView) {
                    ((TextView) obj).setText(str);
                } else if (obj instanceof EditText) {
                    ((EditText) obj).setText(str);
                } break;
            case drawable:
                Drawable d = getResources().getDrawable(
                         getldentifier(resid, "drawable"));
                if (obj instanceof ImageView) {
                    ((ImageView) obj).setImageDrawable(d);
                } else if (obj instanceof View) {
                    ((View) obj).setBackgroundDrawable(d);
                } break;
            case array:
                break;
            default:
                break;
            }
      }
```

In Step 3, the skin software development tool module 4012 is implanted into the front-end application unit 401 (e.g., the home page home.apk). The skin software development tool module 4012 may call each skin interface in the back-end configuration management unit 402 and display it on the passenger interface of the terminal.

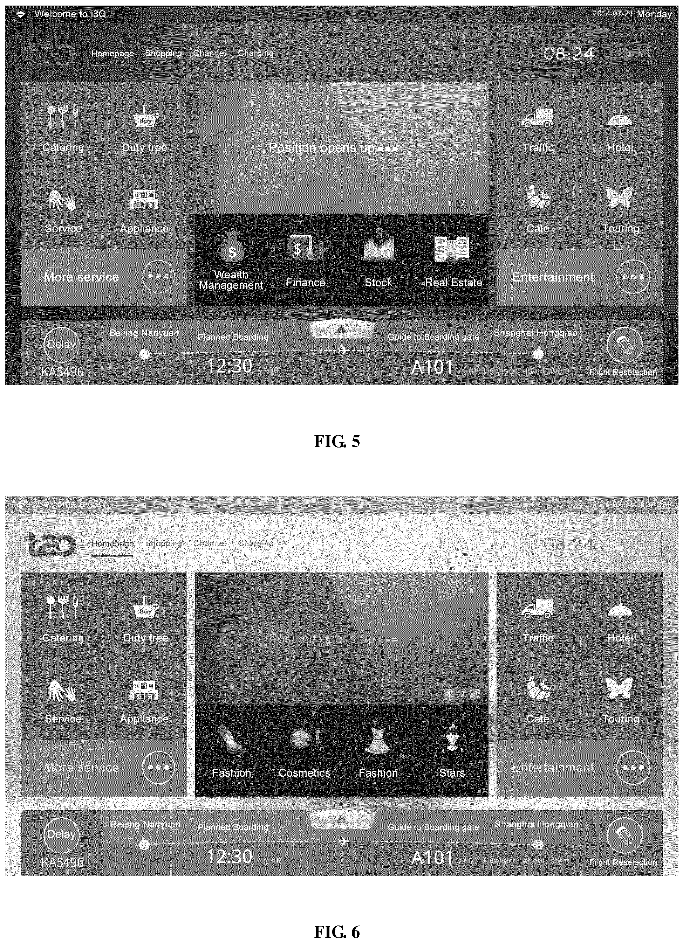

Fig. 5 is a schematic diagram of a skin interface for a high-end business group according to an embodiment of the present invention. As shown in Fig. 5, this interface focuses on applications that match the interests of high-end business people such as wealth management, finance, stock markets, and property markets. A background color of this interface may be dominated by a gray tone or a blue tone.

The specific settings of the skin configuration unit of the skin display interface are as follows:
1) Skin ID: Skin001;
2) Skin name: high-end business skin package;
3) Skin path: skin resource library/home_skin1.apk;
4) Skin usage range:
   Gender: male;
   Age: 35-45;
   Airline: Unselected by default;
   Flight Number: Unselected by default;
   Destination: Shanghai, Guangzhou or Beijing.

When a man conforming to the above conditions logs in the multimedia terminal 10 and enters the home page, the skin package application module calls a skin interface 1 of home_skin1.apk with the skin ID: skin001 and loads the skin interface to be displayed on a passenger interface of the terminal.

Fig. 6 is a schematic diagram of a skin interface for a young lady group according to an embodiment of the present invention. As shown in Fig. 6, this interface focuses on applications that match the interests of young ladies, such as fashion, makeup and stars. A background color of this interface may be dominated by a bright and warm pink tone.

Taking a 25-year-old young lady as an example, the specific settings of the skin configuration unit when the skin display interface is displayed are described below:
1) Skin ID: Skin002;
2) Skin name: young lady skin package;
3) Skin path: skin resource library/home_skin2.apk;
4): Skin usage range:
   Gender: female;
   Age: 20-30;
   Airline: Unselected by default;
   Flight Number: Unselected by default;
   Destination: Shanghai, Guangzhou or Beijing.

When a passenger (a female, for example 25 years old with the destination of Shanghai) conforming to the above conditions logs in the multimedia terminal 10 and enters the home page, the skin package application module calls a skin interface 2 of home_skin2.apk with skin ID: skin002 and loads the skin interface to be displayed on the passenger interface of the terminal.

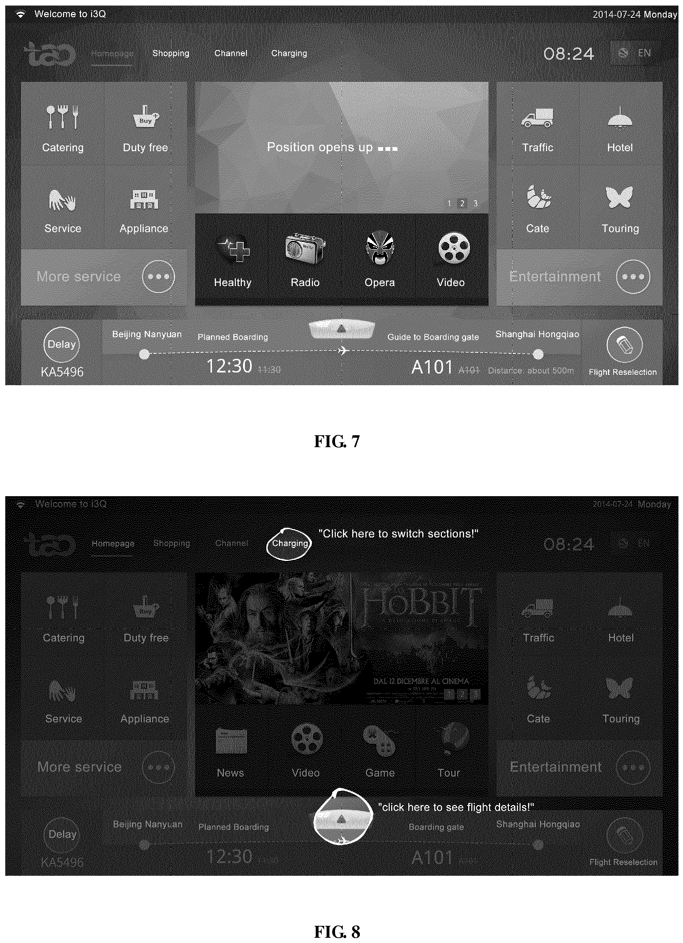

Fig. 7 is a schematic diagram of a skin interface for an elderly person group according to an embodiment of the present invention. As shown in Fig. 7, this interface focuses on applications that match the interests of the elderly persons, such as health, drama, radio, and film and television. A background color of this interface may be dominated by an elegant and calm gray tone. A front-end interface presents an elegant and calm style, and the font size is increased.

The specific settings of the skin configuration unit of the skin display interface are as follows:
1) skin ID: Skin003;
2) Skin name: elderly person skin package;
3) Skin path: skin resource library/home_skin4.apk;
4) Skin usage range:
   Gender: male or female;
   Age: above 50;
   Airline: Unselected by default;
   Flight Number: Unselected by default;
   Destination: Shanghai, Guangzhou or Beijing.

When a passenger (an elderly person, for example 70 years old, with the destination of Beijing) conforming to the above conditions logs in the terminal and enters the home page, the skin package application module calls a skin interface 3 of home_skin3.apk with skin ID: skin003 and loads the skin interface in the skin resource library to be displayed on the passenger interface of the terminal.

Fig. 8 is a schematic diagram of a skin interface for a novice group according to an embodiment of the present invention. As shown in Fig. 8, usage guidance prompts (for example, "click here to switch sections!" and "click here to see flight details!") have been added to this interface to facilitate the passenger's operations. Specifically, the interface may also jump to a corresponding help interface according to the operation information (for example, characters, digits, commands, selections, clicks, slides, etc. input by the passenger) input on the passenger interface, to guide the specific operations of the passenger. This not only makes it very convenient for passengers to operate, but also increases the passenger's enjoyable experience.

In the present embodiment, whether the passenger belongs to a novice group may be judged according to the collected passenger information (which will be described below). When a novice passenger logs in the terminal and enters the home page, the skin package application module calls a skin interface 4 of home_skin4.apk with the skin ID: skin004 and loads the skin interface to be displayed on the passenger interface of the terminal.

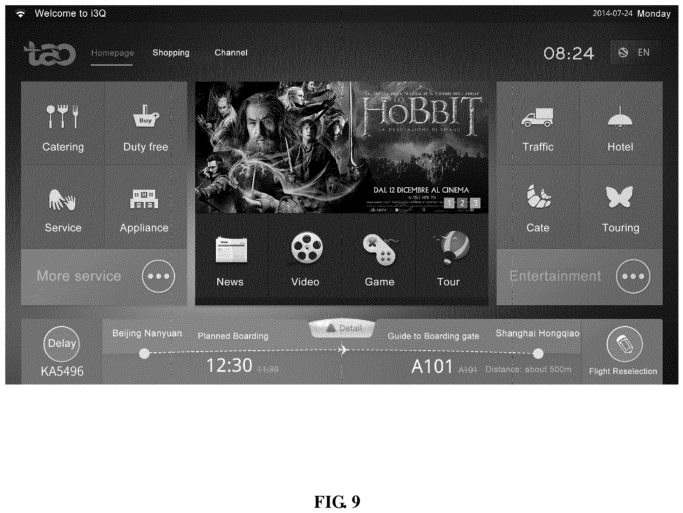

Fig. 9 is a schematic diagram of a default skin interface for a common person group according to an embodiment of the present invention. As shown in Fig. 9, this interface focuses on applications that match with the interests of the general public, such as news, film and television, and games. A background color of this interface may be dominated by a blue tone. When the terminal does not acquire identity information or behavior information of a passenger, or does not determine that the passenger belongs to a certain type of target passenger group, the skin package application module calls a skin interface of home_skin5.apk with the skin ID: skin005 and loads the skin interface to be displayed on the passenger interface of the terminal.

In the present embodiment, the real-time characteristic information of the passenger may be acquired every a predetermined period (for example, 1 minute or 5 minutes), and a skin interface that matches the passenger more accurately may be loaded according to the acquired real-time characteristic information of the passenger.

How to change the skin interface will be described below by taking a 70-year-old elderly person who uses the terminal as an example, to provide a more accurately matched skin interface for him or her.

The elderly person is offered to perform identity authentication by scanning a boarding pass with the primary camera in the collection module and logs in the passenger interface of the terminal after successful authentication. At the very start, the terminal provides the elderly person with applications that may meet the interests of the elderly person, such as health, drama, radio, and film and television according to the identity information of the elderly person. A background color of this interface may be dominated by a gray tone. The front-end interface presents an elegant and calm style, and the font size is increased. However, when the secondary camera recognizes through a face recognition system (for example, a face detection and recognition system Face++ in the third-party server, and the manufacturer of the Face++ system may be, for example, Beijing Megvii Technology Limited) that the elderly person has been not smiling all the way and has anxious expression such as frowns, it is judged that this elderly person is a novice in combination with the collected historical behavior information of the passenger. Therefore, the skin interface for an elderly person shown in Fig. 7 is replaced with a skin interface for a novice shown in Fig. 8 , for providing him or her guidance and prompt services.

The above-mentioned contents are merely some embodiments of the present invention. For a person of ordinary skill in the art, several variations and improvements may be made without departing from the concept of the present invention, and these are all within the protection scope of the present invention.

## Claims

1. A display method for a multimedia terminal for an airport service, comprising the following steps:
collecting (S101) user information;
classifying (S102) the user information into different target user groups on the basis of characteristic attributes of users in the user information; and
calling (S103) a skin interface that matches with the target user group corresponding to the user, and loading the skin interface to a terminal display page of the user.

2. The method according to claim 1, further comprising:
uploading (S201) each skin interface to a skin resource library; and
setting (S202) parameters in a skin configuration file to determine a calling rule for each skin interface.

3. The method according to claim 2, wherein,
the calling rule of the skin interface is determined according to the following parameters:
usage time, usage scope, storage path and name of the skin interface, and attributes of the skin interface corresponding to the target user group;
the calling rule comprises the following factors:
an application scene of each skin interface, and the corresponding relationship between each skin interface and the corresponding target user group.

4. The method according to claim 2 or 3 , further comprising:
generating (S203) a command for calling the skin interface on the basis of the user information and the calling rule; and
calling (S204) the skin interface that matches with the target user group corresponding to the user according to the command.

5. The method according to claim 1 , further comprising:
loading a guidance prompt page that matches with the target user group corresponding to the user on the basis of the user information.

6. The method according to claim 1 , further comprising:
acquiring real-time characteristic information of the user once every a predetermined period, and loading the skin interface according to the acquired real-time characteristic information of the user.

7. The method according to claim 6, further comprising: combining the acquired real-time characteristic information of the user with historical information of the user to determine and load a corresponding skin interface.

8. The method according to claim 6 or 7, wherein the real-time characteristic information is acquired by collecting and identifying a facial expression of the user.

9. A multimedia terminal for an airport service, comprising a collection module, an interface module and a skin application module, wherein,
the collection module (10) is configured to collect user information;
the interface module (30) is configured to transmit the user information collected by the collection module to an external device, and transmit a skin interface from the external device to the skin application module;
the skin application module (40) is configured to classify the user information into different target user groups in the external device on the basis of characteristic attributes of users in the user information collected by the collection module, call a skin interface that matches with the target user group corresponding to the user from the external device using the interface module, and load the skin interface to a terminal display page of the user.

10. The terminal according to claim 9, further comprising:
a storage module (20) configured to store data packages and/or skin interfaces of the different target user groups.

11. The terminal according to claim 9, wherein the skin application module comprises:
a front-end application unit (401) configured to classify the user information into different target user groups in the external device on the basis of characteristic attributes of users in the user information collected by the collection module, call a skin interface that matches with the target user group corresponding to the user from the external device, and load the skin interface to a terminal display page of the user; and
a back-end configuration management unit (402) configured to store and manage the skin interfaces, and determine a calling rule for each skin interface according to the setting of parameters in a skin configuration file.

12. The terminal according to claim 11, wherein
the back-end configuration management unit comprises:
a skin configuration module (4021) configured to determine the calling rule for each skin interface according to the setting of parameters in the skin configuration file, and
a skin resource library (4022) configured to store and manage the skin interfaces;
the front-end application unit comprises:
a main program module (4011) configured to classify the user information into different target user groups stored in the external device on the basis of characteristic attributes of users in the user information collected by the collection module, generate a command for calling the skin interface on the basis of the user information and the calling rule and transmit the command, and
a skin software development tool module (4012) configured to call the skin interface that matches with the target user group corresponding to the user according to the command.

13. The terminal according to claim 9, wherein the collection module is further configured to acquire real-time characteristic information of the user once every a predetermined period, and transmit the real-time characteristic information to the front-end application unit, wherein the front-end application unit is configured to load the skin interface according to the acquired real-time characteristic information of the user.

14. The terminal according to claim 13, the front-end application unit is configured to combine the real-time characteristic information with historical information of the user to determine and load a corresponding skin interface.

15. The terminal according to claim 13 or 14, wherein the collection module is configured to acquire the real-time characteristic information by collecting and identifying a facial expression of the user.
